# EUROPEAN PATENT APPLICATION

(11) **EP 4 838 634 A1**
(43) Date of publication of application: **11.11.2026**
(21) Application number: 26743361.3
(22) Date of filing: 07.01.2026
(51) Int. Cl.: H01M 10/658, H01M 50/367, H01M 10/6551, H01M 10/613, H01M 50/204

(54) **BATTERY UNIT, BATTERY CELL ASSEMBLY COMPRISING SAME, AND BATTERY PACK COMPRISING SAME**

(30) Priority: 16.01.2025 KR 20250006448
(71) Applicant: LG Energy Solution, Ltd., Seoul 07335 (KR)
(72) Inventor: LEE, Sang Joon, Daejeon 34122 (KR); PARK, Shin Young, Daejeon 34122 (KR); KANG, Jong Mo, Daejeon 34122 (KR)
(74) Representative: BCKIP Part mbB
(86) International application number: PCT/KR2026/000361
(87) International publication number: WO 2026/155481

(57) **Abstract**

Disclosed herein relates to a battery unit including: a barrier sheet having a U shape and including a first portion, and second and third portions that are spaced apart from each other with the first portion interposed therebetween; battery cells accommodated in the barrier sheet and arranged in a first direction; and a gap filler pad disposed between the first portion and the battery cells.

## Description

### [Technical Field]

The present disclosure relates to a battery unit, a battery cell assembly including the battery unit, and a battery pack including the battery cell assembly.

More specifically, the present disclosure relates to a battery unit, battery cell assembly, and battery pack based on a lower-venting, upper-cooling concept.

This application claims the benefit of Korean Patent Application No. 10-2025-0006448, filed on January 16, 2025, the disclosure of which is incorporated herein by reference.

### [Background]

Secondary batteries can be repeatedly used over an extended period of time through recharging. Secondary batteries are being applied to various fields including mobility, portable electronic devices, and energy storage systems (ESS). Particularly, the demand for secondary batteries for mobility is further increasing to reduce dependence on fossil fuels and decrease carbon emissions.

However, concerns raised on the safety of secondary batteries for mobility are still an important issue. When fire occurs in a battery pack mounted in the mobility, it may pose a significant threat to human life.

### [Summary]

### [Technical Problem]

The objective of this disclosure is to provide a battery unit, a battery cell assembly, and a battery pack with enhanced safety.

### [Technical Solution]

The exemplary embodiments of the present disclosure capable of solving the above-mentioned problems are as follows.

A battery unit according to exemplary embodiments may include:
a barrier sheet having a U shape and including a first portion, and second and third portions that are spaced apart from each other with the first portion interposed therebetween;
battery cells accommodated in the barrier sheet and arranged in a first direction; and
a gap filler pad disposed between the first portion and the battery cells.

In exemplary embodiments, the second portion may be in contact with a battery cell located at a foremost position in the first direction among the battery cells, and the third portion may be in contact with a battery cell located at a rearmost position in the first direction among the battery cells.

In exemplary embodiments, the gap filler pad may include one or more of ceramic, silicone, and mica.

In exemplary embodiments, the barrier sheet may include one or more of ceramic, silicone, and mica.

In exemplary embodiments, the battery cells may be connected in parallel to each other.

A battery cell assembly according to exemplary embodiments includes battery units and barrier pads, wherein
each of the battery units includes:
a barrier sheet having a U shape and including a first portion, and second and third portions that are spaced apart from each other with the first portion interposed therebetween;
battery cells accommodated in the barrier sheet and arranged in a first direction; and
a gap filler pad disposed between the first portion and the battery cells, wherein
the battery units and the barrier pads may be arranged alternately.

In exemplary embodiments, each of the barrier pads may be in contact with at least one of the second and third portions.

In exemplary embodiments, each of the barrier pads may include one or more of ceramic, silicone, and mica.

A battery pack according to exemplary embodiments includes:
a venting plate including first vent holes;
battery cell assemblies mounted on the venting plate; and
a heat sink mounted on the battery cell assemblies, wherein
each of the battery cell assemblies includes battery units and barrier pads that are arranged alternately, and
each of the battery units includes:
   a barrier sheet having a U shape and including a first portion, and second and third portions that are spaced apart from each other with the first portion interposed therebetween,
   battery cells accommodated in the barrier sheet and arranged in a first direction, and
   a gap filler pad disposed between the first portion and the battery cells.

In exemplary embodiments, each of the battery cell assemblies includes a bottom plate disposed between the venting plate and the battery units, and the bottom plate may include second vent holes.

In exemplary embodiments, the second vent holes and the first vent holes may overlap in a second direction perpendicular to the venting plate.

In exemplary embodiments, the battery units may be in contact with the venting plate.

The battery pack according to exemplary embodiments further includes a base plate disposed below the venting plate, wherein the base plate may be spaced apart from the venting plate.

The battery pack according to exemplary embodiments may further include a venting channel disposed between the venting plate and the base plate, and having a corrugated structure.

In exemplary embodiments, the venting channel includes third vent holes, and the third vent holes and the first vent holes may overlap in a second direction perpendicular to the venting plate.

### [Advantageous Effects]

The battery unit according to the embodiments of the present disclosure includes gap filler pads at the lower part of the battery cells, allowing the battery cells to be accommodated within the barrier sheet without an air gap beneath them. In a battery pack employing a lower-venting, upper-cooling concept, the air gap beneath the battery cells promotes heat propagation during thermal runaway; however, since the battery unit according to the exemplary embodiments of the present disclosure lacks such an air gap, safety can be enhanced.

The effects of the embodiments of the present disclosure are not limited to those described above, and other effects that are not described herein may clearly be derived and understood by one of ordinary skill in the art of the present disclosure from the descriptions herein below. That is, unintended effects that are achieved by implementing the embodiments of the present disclosure may also clearly be derived and understood by one of ordinary skill in the art of the present disclosure.

### [Brief Description of the Drawings]

FIG. 1 is a view schematically illustrating a battery unit according to an embodiment of the present disclosure.
FIG. 2 is a view schematically illustrating a battery cell assembly according to an embodiment of the present disclosure.
FIG. 3 is a view schematically illustrating a battery cell assembly according to another embodiment of the present disclosure.
FIG. 4 is a view schematically illustrating the interior of a battery pack according to an embodiment of the present disclosure.
FIG. 5 is a view schematically illustrating the interior of a battery pack according to another embodiment of the present disclosure.
FIG. 6 is a view schematically illustrating the interior of a battery pack according to still another embodiment of the present disclosure.

### [Best Mode for Carrying Out the Invention]

Words and terms used herein should not be interpreted to be limited to their usual or dictionary meanings, but should be interpreted to have meanings and concepts that correspond to the technical idea of the present disclosure in compliance with the principle that inventors may appropriately define terms and concepts for the purpose of best describing the present disclosure.

In the descriptions herein below, terms such as "include" and "have" are intended to designate the presence of features, numerals, steps, operations, components, parts, and combinations thereof described herein, but should not be interpreted to exclude the presence or possible addition of one or more other features, numerals, steps, operations, components, parts, and combinations thereof. Further, when an element such as a layer, film, region, or plate is present "on" a specific part, this description includes not only a case where the element is disposed "directly on" the specific part, but also a case where another part is present between the element and the specific part. Meanwhile, when an element such as a layer, film, region, or plate is present "below" a specific part, this description includes not only a case where the element is disposed "directly below" the specific part, but also a case where another part is present between the element and the specific part.

It may be appreciated that the embodiments and the drawings are merely examples of the present disclosure, which do not exhaustively represent the technical idea of the present disclosure, and various equivalents and modifications may be made to substitute the embodiments and the drawings.

When describing the present disclosure, detailed description of well-known configurations or functions may be omitted if determined to obscure the gist of the present disclosure.

Since the drawings are provided to further thoroughly describe the invention to one of ordinary skill in the art, for example, shapes, sizes, and the number of components in the drawings may be exaggerated, omitted, or schematically illustrated to more clearly describe the invention. The shapes, sizes or proportions, and the number of components in the drawings may not accurately reflect actual shapes, sizes or proportions, and the number of the components.

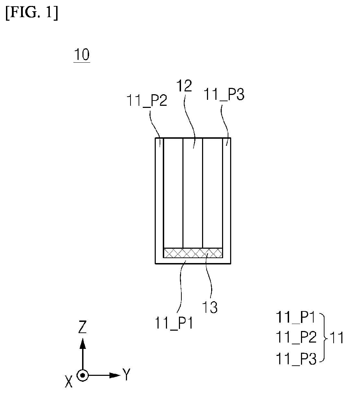

In the present disclosure, for the sake of convenience in description, a three-dimensional Cartesian coordinate system is used to describe, for example, positions, shapes, and relationships of components. The X axis, the Y axis, and the Z axis are illustrated in FIGS. 1 to 6. In the present disclosure, the "X direction" refers to the direction parallel to the X axis. In the present disclosure, the "Y direction" refers to the direction parallel to the Y axis. In the present disclosure, the "Z direction" refers to the direction parallel to the Z axis.

In the present disclosure, the "+X direction" indicates the same direction as the arrow direction of the X axis represented in FIGS. 1 to 6. In the present disclosure, the "-X direction" indicates the opposite direction to the arrow direction of the X axis represented in FIGS. 1 to 6. In the present disclosure, the "+Y direction" indicates the same direction as the arrow direction of the Y axis represented in FIGS. 1 to 6. In the present disclosure, the "-Y direction" indicates the opposite direction to the arrow direction of the Y axis represented in FIGS. 1 to 6. In the present disclosure, the "+Z direction" indicates the same direction as the arrow direction of the Z axis represented in FIGS. 1 to 6. In the present disclosure, the "-Z direction" indicates the opposite direction to the arrow direction of the Z axis represented in FIGS. 1 to 6.

Hereinafter, embodiments of the present disclosure will be described in detail with reference to the drawings.

### (First Embodiment)

FIG. 1 is a view schematically illustrating a battery unit according to embodiments of the present disclosure.

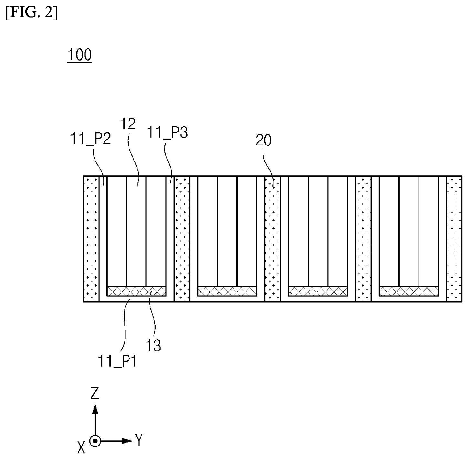

Referring to FIG. 1, a battery unit 10 may include a barrier sheet 11, battery cells 12, and a gap filler pad 13. The battery unit 10 may include battery cells 12 isolated by the barrier sheet 11 and the barrier pad 20 within the battery cell assembly 100, 100' (see FIGS. 2 to 6).

The barrier sheet 11 may have a substantially U shape. The barrier sheet 11 may include a first portion 11_P1, a second portion 11_P2, and a third portion 11_P3. The first portion 11_P1 may connect the second portion 11_P2 and the third portion 11_P3. The second portion 11_P2 and the third portion 11_P3 may be spaced apart from each other in the Y direction with the first portion 11_P1 interposed therebetween.

The barrier sheet 11 may include a flame-retardant material. The barrier sheet 11 may delay or block heat transfer between neighboring battery units 10 when thermal runaway occurs, thereby enhancing safety (see FIGS. 2 to 6). The barrier sheet 11 may include one or more of ceramic, silicone, and mica.

Each of the battery cells 12 may be a lithium secondary battery. Each battery cell 12 may include an electrode assembly, an electrolyte, and a cell case. The electrode assembly may include a positive electrode, a negative electrode, and a separator. The positive electrode may include a positive electrode active material layer, a positive electrode current collector, and a positive electrode tab. The negative electrode may include a negative electrode active material layer, a negative electrode current collector, and a negative electrode tab. The electrode assembly may be of a jelly roll type or a stack type. The jelly roll type may have a structure in which the positive electrode, the negative electrode, and the separator are wound together. The stack type may have a structure in which a first electrode unit including a first positive electrode, a first negative electrode, and a first separator, and a second electrode unit including a second positive electrode, a second negative electrode, and a second separator are stacked with a third separator interposed therebetween. The electrolyte may be of a liquid type or a gel type. The cell case may have a pouch shape. Meanwhile, the cell case may have a cylindrical shape or a prismatic shape, other than the pouch shape. Each of the battery cells 12 may include a positive electrode lead and a negative electrode lead. The positive electrode lead may be electrically connected to one or more positive electrode tabs, and the negative electrode lead may be electrically connected to one or more negative electrode tabs. The positive electrode lead and the negative electrode lead may protrude from one side of the pouch-shaped cell case. The positive electrode lead and the negative electrode lead may protrude in the same direction or in opposite directions.

The battery cells 12 may be arranged in the Y direction. The battery cells 12 may be connected in parallel to form a single bank. The positive electrode leads of the respective battery cells 12 may be connected to each other through, for example, welding. The negative electrode leads of the respective battery cells 12 may be connected to each other through, for example, welding.

The battery cells 12 may be accommodated in the barrier sheet 11. The first portion 11_P1 may be located on the side of the -Z direction relative to the battery cells 12. The second portion 11_P2 may be located on the side of the -Y direction relative to the battery cells 12, and the third portion 11_P3 may be located on the side of the +Y direction relative to the battery cells 12. The second portion 11_P2 may be in contact with the foremost battery cell 12 among the battery cells 12 arranged in the +Y direction, and the third portion 11_P3 may be in contact with the rearmost battery cell 12 among the battery cells 12 arranged in the +Y direction. The first portion 11_P1 may be spaced apart from the battery cells 12 in the Z direction.

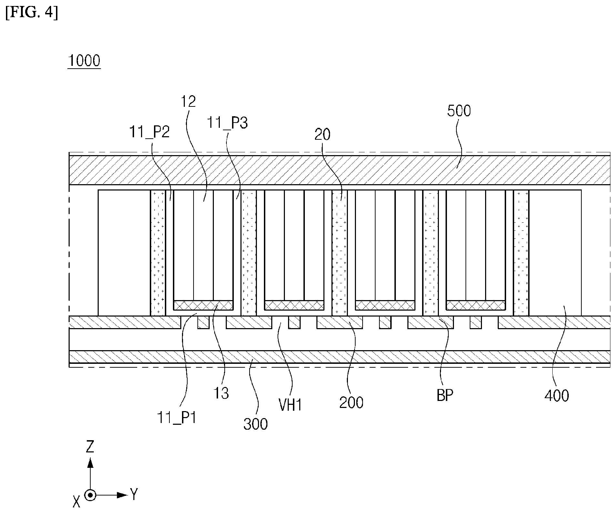

The gap filler pad 13 may be interposed between the first portion 11_P1 and the battery cells 12. When the gap filler pad 13 is not provided, an air gap may be formed between the first portion 11_P1 and the battery cells 12. The air gap may be formed by the tolerance between the battery cells 12 and the first portion 11_P1. When a thermal runaway event occurs in the battery cells 12 in the circumstance where the gap filler pad 13 is absent, a high-temperature gas flows toward the -Z direction, and as a bottom plate 32 and/or a venting plate 200 thermally deforms in the -Z direction, the air gap may increase (see, e.g., FIGS. 4 to 6). At this time, the high-temperature gas penetrates into neighboring battery units 10, which may accelerate heat propagation. However, when the air gap is filled with the gap filler pad 13 as in the embodiments of the present disclosure, the risk described above may be prevented, so that safety may be enhanced.

The gap filler pad 13 may include a flame-retardant material. The gap filler pad 13 may prevent or suppress the thermal deformation of the bottom plate 32 and/or the venting plate 200. The gap filler pad 13 may delay or block the heat transfer between neighboring battery units 10 in the event of thermal runaway, thereby enhancing safety (see, e.g., FIGS. 2 to 6). The gap filler pad 13 may include one or more of ceramic, silicone, and mica.

### (Second Embodiment)

FIG. 2 is a view schematically illustrating a battery cell assembly according to an embodiment of the present disclosure.

Referring to FIG. 2, the battery cell assembly 100 may include battery units 10 and barrier pads 20. The battery cell assembly 100 may not include a configuration to cover the battery units 10 and the barrier pads 20 in the +Z direction or the -Z direction. The battery cell assembly 100 can be said to differ in concept from what is commonly referred to as a battery module.

Each of the battery units 10 is substantially identical to that described in the first embodiment. The battery units 10 and the barrier pads 20 may be arranged alternately in the Y direction. A barrier pad 20 may be interposed between adjacent battery units 10. A battery unit 10 may be interposed between adjacent barrier pads 20. Each barrier pad 20 may be in contact with at least one of the second portion 11_P2 and the third portion 11_P3 of the battery unit 10.

The barrier pad 20 may include a flame-retardant material. The barrier pad 20 may delay or block heat transfer between neighboring battery units 10 in the event of thermal runaway, thereby enhancing safety. The barrier pad 20 may include one or more of ceramic, silicone, and mica.

When each of the plurality of battery units 10 forms a single bank, the battery cells 12 of one of adjacent battery units 10 may be connected in series to the battery cells 12 of the other. The positive electrode leads of the battery cells 12 that form each bank may be connected to the negative electrode leads of the battery cells 12 that form the preceding bank, through, for example, welding. The negative electrode leads of the battery cells 12 that form each bank may be connected to the positive electrode leads of the battery cells 12 that form the subsequent bank, through, for example, welding. The banks may include a first bank, one or more intermediate banks, and a last bank.

When the battery cell assembly 100 includes "n" number of banks, and each bank includes "m" number of battery cells 12, the connection form of the battery cells 12 may be "m" parallel-"n" series (mP-nS). The number of battery cells 12 included in the battery cell assembly 100 and the connection form thereof may be determined based on, for example, the current, voltage, and dimension required for the battery cell assembly 100.

The battery cell assembly 100 may include first and second side beams spaced apart from each other in the Y direction with the battery units 10 and the barrier pads 20 interposed therebetween.

The first and second side beams may have a symmetrical structure with respect to the battery units 10 and the barrier pads 20. The first and second side beams may each have a substantially Γ-shaped structure. The first and second side beams may be fixed to first and second integrated circuit assemblies (not illustrated) to be described herein later. When the battery cell assembly 100 is mounted on the venting plate 200, the first and second side beams may be secured to partitions 400, respectively, through, for example, bolting (see, e.g., FIG. 4).

The first and second side beams may have a mutually complementary structure. One of the first and second side beams may have a substantially L-shaped structure, and the other may have a Γ-shaped structure. The first side beam of one of adjacent battery cell assemblies 100 may be coupled to the second side beam of the other through, for example, bolting. At this time, the coupled first and second side beams may function as the partitions of the battery pack.

The battery cell assembly 100 may include the first and second integrated circuit assemblies spaced apart from each other in the X direction with the battery units 10 and the barrier pads 20 interposed therebetween. The battery cell assembly 100 may include a Flexible Flat Cable (FFC).

The first integrated circuit assembly may include an insulating frame, an integrated circuit, a positive electrode bus bar, a negative electrode bus bar, sensing bars, sensing pads, wires, and an insulating cover.

The insulating frame may include a material with a high electrical insulation property such as plastic. The integrated circuit, the positive electrode bus bar, and the negative electrode bus bar may be fixed to the insulating frame.

The integrated circuit may be configured to measure voltages of nodes. The nodes may be formed with corresponding ones of the positive electrode leads and/or the negative electrode leads that are welded to each other, respectively.

The positive electrode leads of the battery cells 12 forming the first bank may be connected to the positive electrode bus bar through, for example, welding. The negative electrode leads of the battery cells 12 forming the last bank may be connected to the negative electrode bus bar through, for example, welding. The battery cell assembly 100 may be electrically connected to an external system via the positive electrode bus bar and the negative electrode bus bar.

The sensing bars may be coupled to corresponding ones of the positive electrode bus bar and the negative electrode bus bar, respectively. The sensing pads may be coupled to corresponding ones of the positive electrode leads and the negative electrode leads that are welded to each other, respectively. The wires may connect corresponding ones of the sensing bars and the sensing pads to the integrated circuit.

The insulating cover may include a material with a high electrical insulation property such as plastic. The insulating cover may be coupled to the insulating frame by being fitted into the insulating frame. The insulating cover may cover and protect the integrated circuit, the positive electrode bus bar, the negative electrode bus bar, the sensing bars, the sensing pads, and the wires.

The second integrated circuit assembly may include an insulating frame, an integrated circuit, sensing pads, wires, and an insulating cover. The second integrated circuit assembly may be substantially identical to the first integrated circuit assembly, except that the second integrated circuit assembly does not include the positive electrode bus bar, the negative electrode bus bar, and the sensing bars.

The Flexible Flat Cable (FFC) may electrically connect the first integrated circuit assembly and the second integrated circuit assembly. The FFC may transmit sensing values such as voltage measured by the integrated circuit of the second integrated circuit assembly to the integrated circuit of the first integrated circuit assembly.

### (Third Embodiment)

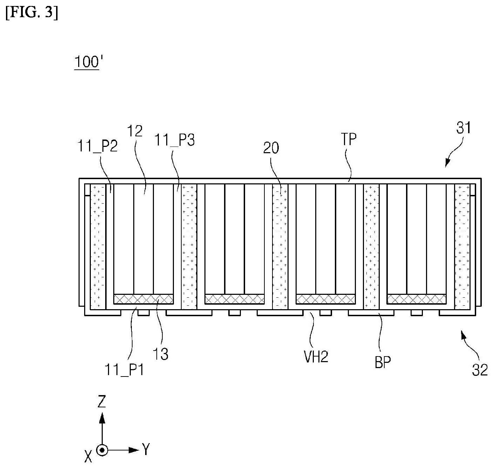

FIG. 3 is a view schematically illustrating a battery cell assembly according to another embodiment of the present disclosure.

Referring to FIG. 3, a battery cell assembly 100' may include battery units 10, barrier pads 20, a first module frame 31, and a second module frame 32. The battery cell assembly 100' may be referred to as a so-called battery module.

The battery units 10 and the barrier pads 20 are substantially identical to those described in the second embodiment.

The first module frame 31 may cover the battery units 10 and the barrier pads 20 in the +Z direction. The first module frame 31 may have a substantially inverted U shape. The first module frame 31 may include a top plate TP and a pair of first vertical portions. The top plate TP may be substantially perpendicular to the Z direction. The pair of first vertical portions may be substantially perpendicular to the Y direction. The top plate TP may be connected to the pair of first vertical portions. The pair of first vertical portions may be spaced apart from each other in the Y direction with the top plate TP interposed therebetween. The top plate TP may be located on the side of the +Z direction relative to the battery units 10 and the barrier pads 20. One of the pair of first vertical portions may be located on the side of the -Y direction relative to the battery units 10 and the barrier pads 20, and the other may be located on the side of the +Y direction relative to the battery units 10 and the barrier pads 20.

The second module frame 32 may cover the battery units 10 and the barrier pads 20 in the -Z direction. The second module frame 32 may have a substantially U shape. The second module frame 32 may include a bottom plate BP and a pair of second vertical portions. The bottom plate BP may be substantially perpendicular to the Z direction. The pair of second vertical portions may be substantially perpendicular to the Y direction. The bottom plate BP may be connected to the pair of second vertical portions. The pair of second vertical portions may be spaced apart from each other in the Y direction with the bottom plate BP interposed therebetween. The bottom plate BP may be located on the side of the -Z direction relative to the battery units 10 and the barrier pads 20. One of the pair of second vertical portions may be located on the side of the -Y direction relative to the battery units 10 and the barrier pads 20, and the other may be located on the side of the +Y direction relative to the battery units 10 and the barrier pads 20.

The first module frame 31 and the second module frame 32 may be coupled to each other. In the state of being coupled to each other, the first module frame 31 and the second module frame 32 may accommodate the battery units 10 and the barrier pads 20 therein. One of the pair of second vertical portions of the second module frame 32 may be in contact with corresponding one of the pair of first vertical portions of the first module frame 31, and the other of the pair of second vertical portions may be in contact with the other corresponding one of the pair of first vertical portions. One of the pair of second vertical portions may be positioned between corresponding one of the pair of first vertical portions and the battery unit 10, and the other of the pair of second vertical portions may be positioned between the other corresponding one of the pair of first vertical portions and the battery unit 10.

The bottom plate BP of the second module frame 32 may include second vent holes VH2. When a thermal runaway event occurs in the battery cells 12, a high-temperature gas may flow toward the -Z direction through the second vent holes VH2.

The battery cell assembly 100' may include first and second integrated circuit assemblies spaced apart from each other in the X direction with the battery units 10 and the barrier pads 20 interposed therebetween. The first and second integrated circuit assemblies may be identical to those described in the second embodiment. Each of the first and second integrated circuit assemblies may further include intermediate bus bars. The intermediate bus bars may be fixed to the insulating frame. Each of the intermediate bus bars may be connected to the positive electrode leads or the negative electrode leads of the battery cells 12 forming corresponding one of the intermediate banks through, for example, welding.

### (Fourth Embodiment)

FIG. 4 is a view schematically illustrating the interior of a battery pack according to an embodiment of the present disclosure.

Referring to FIG. 4, a battery pack 1000 may include battery cell assemblies 100, the venting plate 200, a base plate 300, the partitions 400, and a heat sink 500. The battery pack 1000 may be the final configuration of a battery system mounted in the mobility. The battery pack 1000 may be configured by a cell-to-pack method.

Each battery cell assembly 100 is substantially identical to that described in the second embodiment.

The venting plate 200 may support the battery cell assembly 100. The venting plate 200 may be in contact with the battery units 10. The venting plate 200 may be substantially perpendicular to the Z direction. The venting plate 200 may include first vent holes VH1. When a thermal runaway event occurs in the battery cell assembly 100, a high-temperature gas may flow toward the -Z direction through the first vent holes VH1.

The base plate 300 may be spaced apart from the venting plate 200 in the Z direction. The base plate 300 may be located on the side of the -Z direction relative to the venting plate 200. The high-temperature gas flowing toward the -Z direction through the first vent holes VH1 may pass sequentially through the space between the base plate 300 and the venting plate 200 and the space inside the side walls, and then, be vented outside the battery pack 1000 through a venting device. The side walls and the venting device will be discussed herein later.

The base plate 300 may be coupled to the venting plate 200 through, for example, bolting. According to an embodiment, a gasket may be interposed between the base plate 300 and the venting plate 200. The gasket may be disposed on the perimeter of the base plate 300 and the perimeter of the venting plate 200.

The partitions 400 may isolate the battery cell assembly 100 in the Y direction. The partitions 400 may be substantially perpendicular to the Y direction. The partitions 400 may be formed by an extrusion process, and may include hollows therein. The hollows may extend in the X direction. The partitions 400 may be lightweight due to the hollows.

The heat sink 500 may cover the battery cell assembly 100 in the +Z direction. The heat sink 500 may function as a cover for the battery pack 1000. The heat sink 500 may be substantially perpendicular to the Z direction. According to an embodiment, the heat sink 500 may include cooling channels. The cooling channels may be formed by an extrusion process. A cooling fluid may flow through the cooling channels. The cooling fluid may absorb heat from the battery cell assembly 100 to lower the temperature of the battery cell assembly 100. The heat sink 500 may be coupled to the side walls to be described herein later through, for example, bolting. A gasket may be interposed between the heat sink 500 and the side walls. The gasket may be disposed on the perimeter of the heat sink 500.

The battery pack 1000 may include the side walls. The side walls may be disposed on the perimeter of the venting plate 200. The side walls may be secured to the venting plate 200 through, for example, bolting or welding. The side walls may surround the components inside the battery pack 1000. The side walls may be formed by an extrusion process, and may include hollows therein. The side walls may be lightweight due to the hollows. A high-temperature gas may flow through the hollows.

One or more venting devices may be installed in one or more of the side walls. The venting device may be configured to provide a path through which a high-temperature gas or the like in the battery pack 1000 may be discharged outside the battery pack 1000 when incidents such as a thermal runaway event occur in the battery pack 1000. The venting device may be configured to prevent, for example, dust, moisture, and water outside the battery pack 1000 from entering the battery pack 1000.

The battery pack 1000 may include electronic components. For example, the electronic components may include a Battery Management System (BMS), a Power Relay Assembly (PRA), and a safety plug. The BMS may be configured to monitor the state of the battery cells 12, such as the voltage, current, and temperature, uniformly balance, for example, the voltage and capacity among the battery cells 12, and control the charging and discharging of the battery cells 12. The PRA may be configured to connect or disconnect a high-voltage circuit according to signals from the BMS, thereby supplying or blocking a high-voltage current of the battery cell assemblies 100 to external loads such as a motor and an inverter. The PRA may be configured to mitigate a voltage surge, thereby preventing damage to external loads such as a motor and an inverter.

### (Fifth Embodiment)

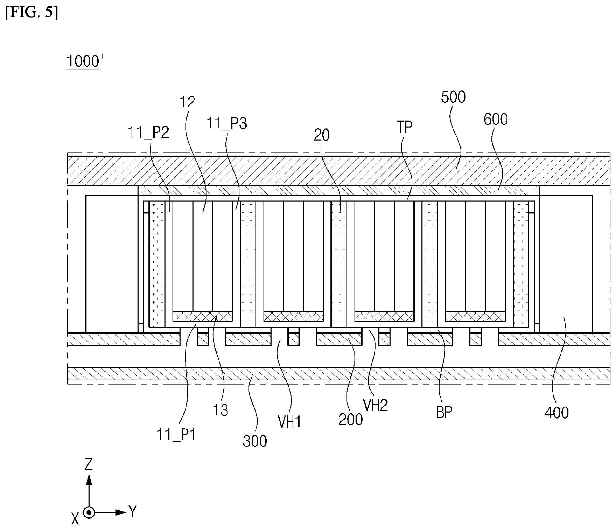

FIG. 5 is a view schematically illustrating the interior of a battery pack according to another embodiment of the present disclosure.

Referring to FIG. 5, a battery pack 1000' may include a battery cell assembly 100', a venting plate 200, a base plate 300, partitions 400, a heat sink 500, and a thermal interface material layer (TIM layer) 600. The battery pack 1000' may be the final configuration of a battery system mounted in the mobility. The battery pack 1000' may be configured by a cell-to-module-to-pack method.

The battery cell assembly 100' is substantially identical to that described in the third embodiment. The venting plate 200, the base plate 300, the partitions 400, and the heat sink 500 are substantially identical to those described in the fourth embodiment.

The bottom plate BP may be disposed between the venting plate 200 and the battery unit 10. The battery unit 10 may be spaced apart from the venting plate 200 in the Z direction. The second vent holes VH2 and the first vent holes VH1 may overlap in the Z direction. When a thermal runaway event occurs in the battery cell assembly 100', a high-temperature gas may flow toward the -Z direction through the second vent holes VH2 and the first vent holes VH1.

The TIM layer 600 may be disposed between the top plate TP and the heat sink 500. The TIM layer 600 may mediate heat transfer between the battery cell assembly 100' and the heat sink 500. The TIM layer 600 may facilitate cooling of the battery cell assembly 100'.

The TIM layer 600 may include a resin composition. The resin composition may be cured, for example, at room temperature. Meanwhile, the curing of the resin composition may be accelerated at a temperature higher than room temperature. The resin composition may include a base resin, a curing agent, and an inorganic filler. The base resin may include one or more of urethane resin, silicone resin, epoxy resin, and acrylic resin. The curing agent may be determined according to the base resin. The curing agent may include one or more of an isocyanate compound, a siloxane compound, an amine compound, and a peroxide compound.

The battery pack 1000' may include side walls, one or more venting devices, and electrical components, which are substantially the same as those described in the fourth embodiment.

### (Sixth Embodiment)

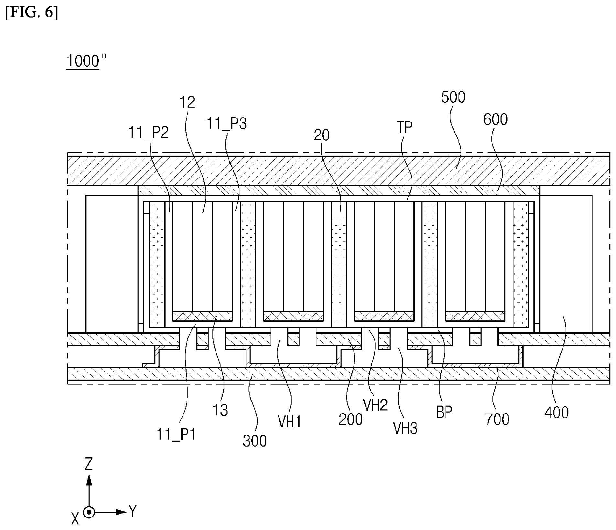

FIG. 6 is a view schematically illustrating the interior of a battery pack according to still another embodiment of the present disclosure.

The sixth embodiment is substantially identical to the fourth embodiment or the fifth embodiment except that the sixth embodiment further includes a venting channel 700.

Referring to FIG. 6, a battery pack 1000" may further include the venting channel 700. While FIG. 6 illustrates the battery pack 1000" including a battery cell assembly 100', this configuration is merely an example. The battery pack 1000" may include the battery cell assembly 100 instead of the battery cell assembly 100'.

The venting channel 700 may include a substantially corrugated structure. The venting channel 700 may be disposed between the venting plate 200 and the base plate 300. The venting channel 700 may include third vent holes VH3. The third vent holes VH3 may overlap with the first vent holes VH1 in the Z direction. The third vent holes VH3 may overlap with the second vent holes VH2 in the Z direction. When a thermal runaway event occurs in the battery cell assembly100', a high-temperature gas may flow toward the -Z direction through the second vent holes VH2, the first vent holes VH1, and the third vent holes VH3 in this order.

The foregoing description is merely illustrative of the present disclosure. The scope of the present disclosure should be interpreted based on the claims, and all technical ideas equivalent to the claims or falling within the scope of equivalents thereof should be interpreted as being included in the scope of the present disclosure.

### [Description of Reference Numerals]

10: BATTERY UNIT
11: BARRIER SHEET
11_P1: FIRST PORTION
11_ P2: SECOND PORTION
11_P3: THIRD PORTION
12: BATTERY CELL
13: GAP FILLER PAD
100, 100': BATTERY CELL ASSEMBLY
20: BARRIER PAD
31: FIRST MODULE FRAME
32: SECOND MODULE FRAME
TP: TOP PLATE
BP: BOTTOM PLATE
VH2: SECOND VENT HOLE
1000, 1000', 1000": BATTERY PACK
200: VENTING PLATE
VH1: FIRST VENT HOLE
300: BASE PLATE
400: PARTITION
500: HEAT SINK
600: TIM LAYER
700: VENTING CHANNEL
VH3: THIRD VENT HOLE

## Claims

1. A battery unit comprising:
a barrier sheet having a U shape and including a first portion, and second and third portions that are spaced apart from each other with the first portion interposed therebetween;
battery cells accommodated in the barrier sheet and arranged in a first direction; and
a gap filler pad disposed between the first portion and the battery cells.

2. The battery unit of claim 1, wherein
the second portion is in contact with a battery cell located at a foremost position in the first direction among the battery cells, and
the third portion is in contact with a battery cell located at a rearmost position in the first direction among the battery cells.

3. The battery unit of claim 1, wherein
the gap filler pad includes one or more of ceramic, silicone, and mica.

4. The battery unit of claim 1, wherein
the barrier sheet includes one or more of ceramic, silicone, and mica.

5. The battery unit of claim 1, wherein
the battery cells are connected in parallel to each other.

6. A battery cell assembly comprising battery units and barrier pads, wherein
each of the battery units comprises:
a barrier sheet having a U shape and including a first portion, and second and third portions that are spaced apart from each other with the first portion interposed therebetween;
battery cells accommodated in the barrier sheet and arranged in a first direction; and
a gap filler pad disposed between the first portion and the battery cells, wherein
the battery units and the barrier pads are arranged alternately.

7. The battery cell assembly of claim 6, wherein
each of the barrier pads is in contact with at least one of the second and third portions.

8. The battery cell assembly of claim 6, wherein
each of the barrier pads includes one or more of ceramic, silicone, and mica.

9. A battery pack comprising:
a venting plate including first vent holes;
battery cell assemblies mounted on the venting plate; and
a heat sink mounted on the battery cell assemblies, wherein
each of the battery cell assemblies includes battery units and barrier pads that are arranged alternately, and
each of the battery units comprises:
a barrier sheet having a U shape and including a first portion, and second and third portions that are spaced apart from each other with the first portion interposed therebetween,
battery cells accommodated in the barrier sheet and arranged in a first direction, and
a gap filler pad disposed between the first portion and the battery cells.

10. The battery pack of claim 9, wherein
each of the battery cell assemblies includes a bottom plate disposed between the venting plate and the battery units, and
the bottom plate includes second vent holes.

11. The battery pack of claim 10, wherein
the second vent holes and the first vent holes overlap in a second direction perpendicular to the venting plate.

12. The battery pack of claim 9, wherein
the battery units are in contact with the venting plate.

13. The battery pack of claim 9, further comprising:
a base plate disposed below the venting plate, wherein
the base plate is spaced apart from the venting plate.

14. The battery pack of claim 13, further comprising:
a venting channel disposed between the venting plate and the base plate, and having a corrugated structure.

15. The battery pack of claim 14, wherein
the venting channel includes third vent holes, and
the third vent holes and the first vent holes overlap in a second direction perpendicular to the venting plate.
